# EUROPEAN PATENT SPECIFICATION

(11) **EP 1 063 177 B1**
(45) Date of publication and mention of the grant of the patent: **13.02.2008**
(21) Application number: 99202050.3
(22) Date of filing: 24.06.1999
(51) Int. Cl.: B65D 85/50, A23B 4/16, B65D 81/20, A23L 3/3418

(54) **Methods and devices for packaging and treating alive bivalves**
Verfahren und Vorrichtung zum Verpacken und Behandeln von lebendigen zweischaligen Muscheln
Méthodes et dispositifs pour l'emballage et le traitement de bivalves vivantes

(43) Date of publication of application: 27.12.2000
(73) Proprietor: Keizer, Cornelis, 1943 DZ Beverwijk (NL)
(72) Inventor: Keizer, Cornelis, 1943 DZ Beverwijk (NL)
(74) Representative: Prins, Adrianus Willem

(56) References cited:
- EP-A- 0 471 611
- EP-A- 0 720 954
- EP-A- 0 880 899
- US-A- 4 926 614
- PATENT ABSTRACTS OF JAPAN vol. 007, no. 147 (C-173), 28 June 1983 & JP 58 060935 A (SHIRAHAMA FOODS:KK), 11 April 1983,
- PATENT ABSTRACTS OF JAPAN vol. 014, no. 074 (C-0687), 13 February 1990 & JP 01 291740 A (RYOJI SASAKI), 24 November 1989,
- PATENT ABSTRACTS OF JAPAN vol. 008, no. 122 (C-227), 8 June 1984 & JP 59 034842 A (TAKAO NAGANO), 25 February 1984,

## Description

The invention relates to a container and method for processing and/or packaging fresh, thus alive, bivalve shellfish. Such methods are generally known from EP 0 720 954 A1 (Cornelis Keizer, 1996), EP 0 880 899 A1 (Jacobus Prins, 1998), JP-A-1 291740 (Sasaki Ryoji, 1988) and NL 9400652 (J.K. Vette and C.W. Vette, 1994).

It is known that the littoral zone, the coastal area with high and low tide, forms the common habitat conditions for bivalves. For bivalves, living high on the shore-line, low tide leads to a temporary exposure to air, which results in closure of the valves to prevent the animal from desiccation. On account of tight valve closure the oxygen supply is cut off and the bivalve is forced to generate its energy by anaerobic mechanisms (which is obtained by an adaptation of the classical E.M.P= Embden-Meyerhof-Parnas scheme).

In other words: bivalves are, depending on the prevailing conditions, able to adopt either an aerobic or an anaerobic metabolism, the latter being characterised by a decrease or lack of oxygen availability (anoxia). During anoxia an oxygen deficit occurs which is retrieved at a later stage, with simultaneous secretion of metabolic by-products, once the aerobic metabolism is adopted again.

Bivalves may experience conditions which induce the anaerobic metabolism: in a natural way during low tide and exposure to ambient air or artificially during dry processing and/or packaging.

Even bivalves being exposed to wet conditions (immersed in water) may be artificially forced to isolate themselves from this wet environment and to adopt the anaerobic metabolism: by creating a threatening situation by for instance chemical and/or physical means or by exerting a sufficient force the valves will be tightly closed. The animal is brought in a clamped state, which prevents both the supply of oxygen-containing water to, and the discharge of water polluted with metabolic by-products from, the animal.

Furthermore it is known that energy consumption during anaerobic metabolism is far less than during aerobic metabolism. The anaerobic metabolism obviously means the start of the period ultimately leading to death, since the animal is not provided with food and oxygen from the outside environment any more. It will be evident that the aerobic metabolism in a wet environment, comparable with the natural aquatic habitat, only offers conditions to continue "normal" living.

However, time-until-death c.q. remaining shelflife for bivalves, in excellent biological conditions and kept in a dry environment thus in a state of anaerobic metabolism, can amount to some weeks and even two months. Time-until-death will, at the anaerobic metabolism, be shorter if the animal has lost the water commonly confined within the valve parts: the bivalve would desiccate and is unable to secrete metabolic by-products.

Moreover time-until-death of bivalves, having lost this water, and subsequently remaining in this fluid, will be shortened. Loosely packaging in a closed, airtight container or bag, resulting in a substantial drip loss will apart from accelerating the dieing process also facilitate growth of anaerobic bacteria. Both the fluid surrounding the bivalve, containing proteins and other components, as well as the dead bivalve itself will be an excellent medium for anaerobic spoilage which is encompassed with nasty smelling acidic off-odours and even more important the formation of toxic components being dangerous to human health.

EP 0 720 954 A1 (Keizer) discloses a method for packaging alive bivalves by forcing and keeping them in a clamped state while remaining in an essentially dry, oxygen-containing environment. The bivalves are forced to adopt the anaerobic metabolism due to which drip loss will be limited and shelflife be longer compared with loose packaging, and growth of anaerobic bacteria simultaneously is restricted due to the presence of oxygen.

According to this method a series of animals are introduced into a package and the animals are then pressed onto and against one another by means of at least a part of the package. The valve parts of each animal are closed against each other and are always kept closed in the package, the pressure within the package being kept substantially atmospheric, i.e. hardly positively or negatively differing from ambient pressure, or superatmospheric, i.e. well above ambient pressure and the animals being kept in contact with an oxygen-containing environment. According to one of the packaging means the desired force required for closing the shells may result from deformation of the package itself, for instance by reduction of the space available for the animals.

According to JP-A-1 291740 (Ryoji) a number of alive bivalves are put in an airtight bag, after which the bag is vacuumed, to a pressure of about 50 to 500 Torr i.e. 0.3 to 0.9 bar below ambient pressure, and closed. The bivalves are, due to the forces exerted by the vacuumed bag, brought in a clamped state and cannot open the shell. The clamped state causes according to Ryoji the anaerobic metabolism as may be understood from the information provided above, bringing about prolongation of the life of bivalves.

Experiments with this known method show however results with a drastically decreasing time-until-death for bivalves exposed to air at vacuum conditions of more than about 0.3 bar below atmospheric pressure, i.c. at less than approximately 500 Torr.

Optimal prolongation of time-until-death thus requires a substantially atmospheric pressure. The pressure not necessarily has to be equal to, though may be slightly below ambient pressure. The larger the decrease in pressure below ambient pressure, the more resistance the animal has to offer in order to avoid being sucked out of its shell (the animal itself and/or the fluids confined within the shell), the more this will be at the expense of remaining time-until-death. Superatmospheric pressures, even well above ambient pressure, did not show to be harmful to the animals.

NL 9400652 (Vette) also refers to substantially atmospheric pressures when describing packaging of alive bivalves completely immersed in (sea-)water at vacuum conditions, i.e. at a subatmospheric pressure of preferably 0.98 bar. Characteristic of this prior art method is that packaging at just subatmospheric pressure is claimed as a last indissoluble step of a sequence of three subsequent steps: after cleaning, debyssing and further processing the bivalves have in a second step to be cooled and conditioned (to set the metabolism at rest) by immersion in salt water which is preferably provided with air or oxygen, before actual packaging preferably together with water in a closed container at a pressure just below ambient pressure.

EP 0 880 899 A1 (Prins) discloses a method for packaging alive shellfish or crustaceans in a hermetically closed (liquid-tight and gas-tight) container or flexible bag, which does not have the drawback of requiring large volumes. Living animals and both a protective gas atmosphere, for example consisting of extra O2 and CO2, and optionally water originating from the animals, are enclosed in a container. The addition of these gases is claimed to benefit the taste and the shelflife and to provide a preserving effect by inhibition of the growth of bacteria.

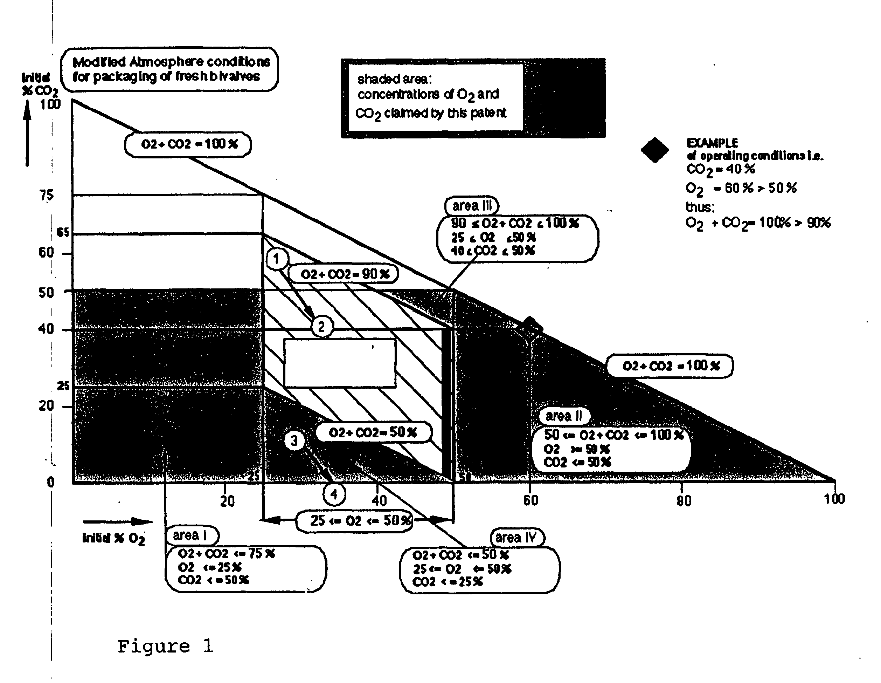

Further, subatmospheric pressure may prevail in the container. The quantity of O2 ought to amount in-between 25 and 50 %, whereas the sum of the quantities of O2 and CO2 ought to be in-between 50 and 90 %. From these data the quantity of CO2 can be calculated to amount in-between 25 and 65 % CO2 at the lowest level of 25 % oxygen, and in-between 0 and 40 % CO2 at the highest level of 50 % oxygen. In Figure 1 these claimed packaging conditions are depicted. It is remarked that the concentrations of O2 and CO2 change after sealing the package due to dissolution of CO2 by water or components similarly behaving with respect to dissolution. The concentration of CO2 decreases and as a result the concentration of O2 will increase. According to the claims the concentration of O2 will not exceed 50 % of the total content of gas in a container. Points 1 and 2 in Figure 1 respectively illustrate conditions at closing the package and some time after closing.

The preservative effect, referred to in EP 0 720 954 A1 (Keizer), deals with the prevention of the growth of anaerobic bacteria and is obtained by the presence of oxygen. EP 0 880 899 A1 (Prins) also implicitely claims protection against aerobic decay, which obviously refers too to dead organic material being present in the package containing the living bivalves. From state of the art Modified Atmosphere Packaging (MAP) it is known that protection of dead products, as for instance meat, against spoilage at aerobic conditions is ascribed to CO2 as a main active component. This preservative effect cannot be realised in the case of packaging alive bivalves as it is only obtained at restricted conditions with respect to the concentration of CO2 in the gas and certain headspace to amount of product ratios, which are not satisfied here.

In this known MAP the decrease in pressure which attends dissolution of CO2 after having closed a package, is commonly considered as a drawback because of the risk of pack collapse and squeezing of the product.

Application of CO2, especially to force the bivalves in a clamped state, will however be accompanied by negative effects on time-until-death just because the clamped state is obtained by dissolution of CO2 in the "water" fraction available within the package. The "water" fraction may be considered to consist of the water confined by and/or attached to the animals and/or water lost by the animals (drip), as well as the soft, edible part (c.q. flesh, meat, tissue) of the animals, which itself consists for the larger part of water.

The benefits of Modified Atmosphere Packaging of alive bivalves with application of CO2 as a main component will be restricted to prevention of aerobic spoilage of proteins, etc. being present in the drip loss and/or of bivalves that are already unwantedly dead. The eventual occurrence of either aerobic or anaerobic spoilage outside the tightly clamped, still living bivalves does not effect these animals as will be dealt with below.

EP 0 880 899 A1 (Prins) optionally mentions enclosure in the package of water originating from the animals, i.e. water attached to and/or confined by the animals. It is remarked here that if no attached water would be enclosed in the packages the CO2 would be dissolved by the animals themselves and cause instantaneous death. In actual practice there will always be some water confined by and/or attached to the bivalves. As the package initially will be at atmospheric pressure and not yet be sufficiently tight, as required according to EP 0 720 954 A1 (Keizer), there will be some leakage of water confined by the bivalves even when in a clamped state. This drip loss and water attached to the animals will absorb CO2 and cause a pressure reduction in the package which than finally yields a sufficiently tight packaging to prevent further drip loss. Our experiments showed that the bivalve is not able to hermetically close its shells (valve parts) with respect to gases and to maintain atmospheric pressure within the shells when the pressure outside the shells, i.c. in the package, is lower. The pressure within the shells will become equal to the pressure in the package which will lead to some additional loss of water first confined by the animal. Correspondingly one can conclude that though CO2 may avoid the development of an ammonia-odour it is primarily applied to force the bivalves to adopt the anaerobic metabolism by bringing the bivalves in the clamped state by sufficiently tight packaging fully in accordance with EP 0 720 954 A1 (Keizer) . Extension of time-until-death according to EP 0 880 899 A1 (Prins), i.c. by application of CO2 to obtain a sufficiently tight package, may be comparable with the results according to EP 0 720 954 A1 (Keizer), provided that the concentration of CO2 is kept below 50 % (less than claimed by EP 0 880 899 A1) for bivalves being in a good condition. Bivalves with a poor biological condition, for instance at the end of the harvesting season, show increased drip losses due to which the pressure in the package will decrease to values at which time-until-death will be shortened instead of being extended. In order to avoid this the concentration of CO2 has to be substantially decreased to a level of 30 to 40 %.

Application of CO2, to force the bivalves in the clamped state, will inevitably thus always induce drip losses which can be considered as a main drawback.

A further drawback of packaging alive bivalves at atmospheric pressure or at just below ambient pressure, due to exposure to CO2, is that the finally resulting pressure in the package depends on i.a. the temperature of the bivalves and the ratio between the amount of water in, and the headspace volume of, the package. The volume ought to be as small as possible i.e. just enough to contain the animals. If the volume would be larger more CO2 not only has to be added but also to be dissolved by the "water" fraction in order to reduce the volume i.e. to force the animals to close their valves. The larger volume i.e. a larger amount of CO2 would also result in an increased concentration of CO2 in the "water" fraction which will dramatically decrease time-until-death.

Throughout the year (harvesting season) the ratio between the mass of the meat and total mass of the animal, as well as the total mass-to-volume ratio of the animal and the water contents in the meat, show large variations. Within a lot of the animals there is a likewise variation in the latter ratio. The finally resulting pressure in the package, which is both determined by the amounts of water and CO2 in the package and which are difficultly to be controlled, may consequently considerably vary. Correspondingly the quality of the living bivalves, i.e. time-until-death and the amount of drip which is lost, may considerably vary which may be considered to be a drawback.

The objects of this invention involve the decrease of the costs of packaging alive bivalves and increased control and/or improval of their quality. As stated before bivalves are, depending on the prevailing conditions, able to adopt either an aerobic or an anaerobic metabolism, the latter not being characterised by a lack of oxygen as such though by the inability of the animals to make the oxygen available for maintaining the aerobic metabolism.

Surprisingly bivalves exposed to oxygen or ambient air, thus aerobic conditions, or to other gases, either at atmospheric or superatmospheric or vacuum conditions, live by definition according to the anaerobic metabolism. The animals can only take up oxygen dissolved in a liquid i.c. in water (wet environment). Bivalves exposed to an aerobic gaseous environment cannot take up oxygen being in a gaseous state (dry environment) and correspondingly adopt an anaerobic metabolism in spite of the fact that oxygen is available. Our experiments showed exactly the same time-until-death for initially alive bivalves when stored at atmospheric pressure in either pure oxygen (100 % O2) or in pure nitrogen (100 % N2). This affirms that, in spite of exposure of living bivalves to an aerobic atmosphere (pure oxygen), the animals adopt an anaerobic metabolism. Furthermore it is remarked that crustaceae are only able to live according to the aerobic metabolism i.e. are only able to stay alive in water containing sufficient oxygen.

With respect-to delivering alive products with an increased time-until-death to the consumer the presence of CO2 may be considered to be irrelevant and easily yield the opposite effect. Our experiments revealed that exposure of living bivalves to CO2 concentrations exceeding 50 % resulted in a drastical reduction of time-until-death for animals being in a clamped state, whereas gaping animals, i.e. with their shells opened, even instantaneously died. It could be concluded that the bivalve is not able, even in the clamped state, to close its valves tight enough to prevent penetration of CO2 throughout the sealing of the shells. Moreover drip losses, i.e. the loss of water initially confined by the shells, substantially increased due to the presence of CO2.

The objects of this invention relate to a conscious application of the distinction between the 2 types of metabolism and to impose the corresponding conditions to force the animals to adopt either the aerobic or the anaerobic metabolism.

According to the first object the quality of fresh, alive bivalves, packaged in a gas-tight and liquid-tight container, according to claim 1 can be maintained at not only a higher level but moreover at a more constant level than according to prior art.

Preferably the animals are forced to close their valves and to adopt the anaerobic metabolism before actual packaging. This can be realised by imposing the animals to a gaseous atmosphere while simultaneously creating a threatening effect, for instance by touching the animals or by movements during transport to the packaging machine. The bivalves are subsequently packaged in air or in a Modified Atmosphere according to one of the further embodiments of a method according to the invention which can all be characterised by the creation of a subatmospheric pressure in the package which is, at least initially at packaging, not less than 0.3 bar and preferably not less than 0.1 bar below the atmospheric pressure. Depending on the flexibility or rigidity of the package this will, due to the difference between ambient pressure and the pressure within the package which exists after having closed the package, cause a certain deformation of the package which brings or maintains the bivalves in the clamped state, enabling continuation of the anaerobic metabolism, at a pressure in between the pressure in the packaging and the atmospheric pressure.

The gas composition in the package ought to consist of at least an amount of oxygen, i.e. the gas may be just ambient air or may be a modified atmosphere containing preferably, though not necessarily, more than 50 % oxygen to even better prevent anaerobic bacterial spoilage of dead organic material being present in the container.

To realise this the bivalves are, according to the method, defined in the claims brought into a chamber containing a gas meeting with the conditions related to pressure and composition as described just before, i.e. at subatmospheric pressure and containing at least an amount of oxygen.

Furthermore the chamber comprises any known type of packaging machine, for instance any horizontal or vertical FFS (Form-Fill-Seal) machine. The packaging machine not necessarily has to be a dedicated machine, i.e. a costly MAP machine.

After liquid-tight and gas-tight packaging of the bivalves in this chamber the package may be discharged from the chamber and be exposed to ambient pressure.

According to the method any known type of vacuum-packaging machine, not necessarily a dedicated MAP machine, may be used to evacuate part of the ambient air present in the package, thus to create a subatmospheric pressure as described here before.

In order to realise a better prevention against anaerobic decay a higher concentration of oxygen may be imposed by either placing the vacuum-packaging machine in a chamber, which contains a higher level of oxygen than air and/or by flushing the package with bivalves with a gas being rich in oxygen before creating a subatmospheric pressure. Obviously the latter conditions, i.e. a package with a high concentration of oxygen at a subatmospheric pressure, can be optionally imposed, though in a less cost-effective way, by application of a dedicated, state of the art, MAP machine. According to this method the package is vacuumed first and subsequently the gas is accurately inserted at exactly the desired composition at subatmospheric pressure, which may be considered as an advantage. Before the Modified Atmosphere gases can be inserted the package first has to be vacuumed at a rather low pressure.

It is remarked that the subatmospheric pressure in both above methods is imposed during packaging and that this pressure remains constant at the pre-set value. This is different from the development of a reduced pressure, due to dissolution of enclosed CO2 , after having closed a package. Moreover, dissolution of CO2 is affected by a variety of parameters thus difficult to be controlled and may easily result in a variation of the subatmospheric pressure and may consequently cause an increase of drip losses and a reduction of time-until-death.

Alternatively, in the above-mentioned methods, the gas completely or partially consisting of O2 may be provided with an additional amount of CO2 not exceeding 50 %. Though both above methods normally suffice to realise the first object, this option applying an amount of CO2, preferably only traces of CO2 , may offer the best prospects for practical application. After having closed the package the packaging material will stretch out due to the forces acting on the material and the animals will re-allocate. These effects may create pseudo-void volumes and correspondingly the forces exerted on the animals may decrease. Including a small amount of CO2 will be accompanied by dissolution in the "water" fraction and simultaneous decrease the volume of the package. The amount of CO2 to be included in the package should be sufficient to compensate for the pseudo-voids, arising after packaging. As a result the forces on the animals will be kept large enough to continue the clamped state of the animals.

Fig. 1 discloses O2 and CO2 concentrations in a package or method according to the present invention.

The composition of the gaseous atmospheres in the packages, to be imposed according to said methods, either or not optionally applying CO2, can be kept restricted to only O2 and CO2. The amounts of O2 and CO2 gas in the headspace may respectively be, either less than 25 % and less than 50 % (depicted in Fig.1 as area I), or more than 50 % and less than 50 % (area II).

Furthermore, concentrations of O2 in between 25 % and 50 % and additionally an amount of CO2 being less than 25 % (area IV) or being inbetween 40 % and 50 % (area III) also suffice the requirements to realise the object of this invention.

The sum of the amounts of O2 and CO2 not necessarily has to be equal to 100 % . Part of the gas may exist of inert gases, for instance as a result of nitrogen unintendedly invading from the ambient environment or as a result of an incomplete removal of nitrogen due to inadequate flushing before closing the package.

Instead of O2 one may prefer to apply ozone O3 or a combination of O2 and O3 to prevent growth of anaerobic bacteria.

Instead of CO2 one may prefer to apply N2O since this component behaves similar as CO2 with respect to dissolution by water and because N2O is less acid than CO2 at comparable concentrations.

The percentages mentioned in this description are to be considered to be volume percentages.

Further, to obtain a more constant product, to extend time-until-death and to further reduce loss of water by the animal, an amount of water may be added in addition to the water confined by and/or attached to the animals to prevent or decrease dissolution of CO2 by the water confined by the animal or by the animal itself, thus preventing decrease of pH. Instead of adding only water when applying CO2 in packaging the bivalves, the water preferably is provided with an amount of lime, i.e. CaO or preferably Ca(OH)2 or similarly active chemical, to absorb the CO2 and/or to irreversibly react with the CO2 in order to prevent dissolution of CO2 by the water fractions or by the animal. As all or nearly all CO2 will react with the lime no gaseous CO2 will be present in the gas after closing the container and having obtained equilibrium conditions. Only a minor amount of CO2 will be required to realise the desired subatmospheric pressure. Just by way of example: if the initial composition of the gas consists of 10 % CO2 , 30 % O2 and 60 % N2 then the final composition, at equilibrium, will be 33.3 % O2 and 66.7 % N2 , whereas the pressure will be 0.1 bar below the atmospheric pressure. Points 3 and 4 in Fig.1 illustrate these conditions during and after packaging. Alternatively instead of separately inserting lime or an equivalent reactant in the container the bivalves may before packaging be exposed, by spraying or dipping, to water containing a small amount of lime. Packaging itself will be more efficient but moreover the lime will act as a chemical threat and assist in keeping the bivalves in the clamped state without being harmful to the bivalves as is known from V.L. Loosanoff and J.B. Engle, US Dept. of the Interior, 1942. Furthermore, lime not being harmful to bivalves, offers a way to eliminate small animals which are attached to and living on the bivalves and which are for esthetical and commercial reasons unwanted.

A further object concerns processing before packaging of alive bivalves. After harvesting bivalves commonly are transported in a dry state by ship or by road, often over long distances requiring a period of one day or longer.

Before processing the bivalves may be stored for a certain time in their natural habitat to allow the animals to "recover from the stress" experienced during transport and to allow them to get rid of sand confined within the shells. After re-harvesting or after harvesting without subsequent storage the bivalves are landed ashore and stored, often in containers, to allow the animals to recover (again) and to (additionally) get rid of sand. The containers or suchlike are either filled and circulated with sea water, i.e. the animals remain at aquatic conditions or sea water is sprayed/sprinkled over the animals remaining in the container.

In case of spraying/sprinkling the bivalves with sea water the animals will hardly or not at all replenish the fluids confined by them before with sea water and will hardly or not at all adopt the aerobic metabolism, i.e. the animals adopt the anaerobic metabolism.

In case the bivalves remain in sea water this not necessarily means that they adopt the aerobic metabolism. Due to the discharge of sewage and/or due to tidal effects the sea water obtained from coastal areas may be easily polluted with organic matter and consequently this sea water may contain only low amounts of oxygen, especially in summertime with higher sea water temperatures. In warmer periods even off-shore clean sea water can/will contain only low amounts of oxygen. Exposure of bivalves, during transport or just before processing, to sea water with low amounts of oxygen will initially allow the animals to adopt the aerobic metabolism, though the lower the oxygen concentration the sooner the oxygen will be depleted and the animals will switch to the anaerobic metabolism. Exposure of bivalves to sea water therefore requires high oxygen concentrations to enable the animals to open their valves in order to discharge the oxygen deficit which has been formed during preliminary anaerobic metabolism, i.e. to "recover" from the stress they experienced, and to enable the animals to secrete metabolic by-products and sand confined within the shells as well as to replenish earlier lost water.

Obviously storage at dry conditions means that the bivalves adopt by definition the anaerobic metabolism. By for instance movements during transport the bivalves will loose fluids contained within the valves and care has to be taken to avoid that the animals will be immersed in these fluids low in oxygen, thus easily resulting in anaerobic deterioration with a harmful effect on time-until-death.

The innovative aspects of the further embodiments relate to periodically forcing the animals to abruptly adopt the aerobic metabolism and the anaerobic metabolism. When switching from their aquatic habitat to exposure by a gaseous atmosphere, for instance after harvesting and subsequent storage at ambient air, the animals will adopt the anaerobic metabolism and after a while they will open their valves (gaping) and loose the fluids contained within the valves. By exposure to (sea-)water and simultaneously imposing a physical and/or a chemical threat, for instance by exposure to water containing CO2 or N2O or another chemical component, which is experienced by the animals as threatening though which not instantaneously leads to death, bivalves will very fast, compared with exposure to ambient air, close their valves and adopt the anaerobic metabolism with a low energy consumption. Moreover the bivalves also keep their valves closed, are not going to gape thus do not loose confined fluids, as long as the danger continues to exist.

After a certain period the water containing CO2 , thus preventing aerobic bacterial growth when applied in adequate amounts, is replaced by preferably refrigerated sea water which is preferably saturated or even oversaturated with oxygen. The sea water is preferably refrigerated, since the lower the temperature the larger the amount of oxygen it can contain and the lower the energy expenditure of the animals will be.

Our experiments showed that the bivalves instantaneously open their valves, intensively take in water thereby changing to the aerobic metabolism. The animals take up oxygen to maintain the aerobic metabolism and to discharge the earlier formed oxygen deficit. Additionally the oxygen prevents anaerobic bacterial growth. The intensive intake of water is evidently accompanied by an equally intensive discharge of water polluted with metabolic by-products and which drags along sand being present in the animal and/or confined within the shells.

In a next step the bivalves can be exposed again to the threatening situation. This step actually concerns a repeat of the first step in a sequence of two steps. The animals immediately close the valves simultaneously locking in oxygen containing seawater.

Depending on the time required for storage during transport or for waiting to be processed this sequence may be repeated. Repeating this cycle will also be in favour of elimination of sand still remained behind in the animal or within the shells.

Moreover, the alternating conditions i.e. the frequently imposed threatening situation, will induce the animals, just as in their natural habitat, to find a less dangerous place and correspondingly the bivalves commonly attached to each other, by means of their byssus threads, will try to get released. Getting the bivalves individually available in this way may be considered as an important advantage. The commonly applied processing step to uncluster the bivalves, thereby really injuring the animals and decisively limiting time-until-death, may be partly or fully substituted by a method of releasing the animals by alternating exposure to threatening conditions.

Our experiments showed however that the periods in which the bivalves are exposed to sea water with abundant oxygen ought preferably not to be too long, since after a while the byssus threads of the animals will grow again and the bivalves will get attached to each other again. Growth of byssus threads increases with increasing velocities and oxygen concentrations of the water.

Furthermore it is remarked that in the first step of each cycle, i.e. the step in which the animals are forced to adopt the anaerobic metabolism due to exposure to for instance water containing CO2 , the animals not necessarily have to remain during the whole step in this water. As soon as the animals have adopted the anaerobic metabolism and correspondingly will be in a clamped state the water can be drained i.e. the animals can be stored at dry conditions for instance in ambient air, provided that other means are applied to keep the animals in the clamped state in order to prevent loss of fluids confined within the shells. These means may be state of the art and may be similar to those described in EP 0 720 954 A1.

## Claims

1. A container, like vessel, bag or similar package for storage, transport and/or distribution of live bivalves, formed by a bottom part, open at the top, which contains said bivalves and a top part, which itself is hermetically closed and comprises a flexible membrane, and which can be placed and attached on the bottom part, said top part and said bottom part so forming an hermetically closed unit consisting of two compartments divided by the membrane, the top part being pressurised in order to bring the bivalves, by means of the pressurised membrane, in a clamped state, in order to obtain increasing time-until-death and decreasing drip losses of the bivalves.

2. A container according to claim 1 in which the bottom part containing the bivalves comprises a gas or a mixture of gases formed by :
- an amount of less than approximately 25% O2 and an amount of less than approximately 50% CO₂; or
- an amount of more than approximately 50% O₂ and an amount of less than approximately 50% CO₂; or
- an amount of O₂ in between approximately 40% and 50% and an amount of CO2 in between approximately 40 % and 50% and an amount of an inert gas of less than approximately 10%; or
- an amount of O2 in between approximately 25 and 50% and an amount of less than approximately 25% CO2, wherein an amount of inert gas is provided exceeding approximately 50% either after an evacuation of air and subsequent insertion of the gas or just by flushing.

3. A container according to claim 1 or 2 which can be opened by removing the top part provided with the flexible membrane to take out part of the bivalves and re-closing, thereby indirectly bringing the remaining bivalves in said clamped state by said membrane, due to the over pressure in said upper part relative to the normal pressure present in said lower part containing said bivalves.

4. A method for packaging live bivalves in a package according to anyone of the claims 1-3, wherein said bivalves are packaged in the bottom part together with a gas or gas mixture, wherein a subatmospheric pressure is created within the bottom part of the package so as to create a sufficiently tight packaging and further pressurising the top part so to force the at least one animal, due to deformation of the package, into a clamped state, whereby the at least one animal adopt an anaerobic metabolism.

5. A method according to claim 4, using a gas mixture containing an amount of less than approximately 25% O₂ and an amount of less than approximately 25% CO₂.

6. A method according to claim 4, using a gas mixture, using a gas mixture containing an amount of more than approximately 50% 02 and an amount of less than approximately 50% CO₂.

7. A method according to claim 4, using a gas mixture containing an amount of O₂ in between approximately 40% and 50% and an amount of CO₂ in between approximately 40% and 50%.

8. A method according to claim 4, using a gas mixture containing an amount of 02 in between approximately 25 and 50% and an amount of less than approximately 25% CO₂.

9. A method of according to any one of claims 4-8, in which the bivalves are provided with either an extra amount of water or an amount of lime chemical product absorbing and/or reacting with CO₂ preventing dissolution of said CO₂ in the water fractions contained in the shell of the animals before or during packaging.

10. A method according to any one of claims 4-9 using a gas or a mixture of gases with a composition according to any one of claims 2 or 3 and at subatmosperic pressure in which a container, vessel or bag comprising alive bivalves is provided in a chamber, which package is hermetically sealed within said chamber by means of a packaging machine within said chamber, wherein the package is subsequently discharged from said chamber.

## Patentansprüche

1. Behälter, wie ein Gefäß, ein Beutel oder eine ähnliche Verpackung zur Lagerung, zum Transport und/oder zur Verteilung von lebenden zweischaligen Muscheln, der gebildet ist von einem unteren Teil, der oben offen ist und der diese zweischaligen Muscheln enthält, und einem oberen Teil, der selbst hermetisch geschlossen ist und eine flexible Membran aufweist, und der an dem unteren Teil angeordnet und befestigt werden kann, wobei der obere Teil und der untere Teil somit eine hermetisch geschlossene Einheit bilden, welche aus zwei, von der Membran getrennten Abteilungen besteht, wobei der obere Teil unter inneren Überdruck gesetzt ist, um die zweischaligen Muscheln mit Hilfe der unter inneren Überdruck gesetzten Membran in einen zusammen gepressten Zustand zu versetzen, um eine verlängerte Lebenszeit bis zum Tod und eine Verminderung der Tropfverluste der zweischaligen Muscheln zu erzielen.

2. Behälter gemäß Anspruch 1, bei welchem der untere, die zweischaligen Muscheln enthaltende Teil ein Gas oder ein Gasgemisch aufweist, das gebildet ist aus:
- einer Menge von weniger als ungefähr 25% O₂ und einer Menge von weniger als ungefähr 50% CO₂; oder
- einer Menge von mehr als ungefähr 50% O₂ und einer Menge von weniger als ungefähr 50% CO₂; oder
- einer Menge von O₂ zwischen ungefähr 40% und 50% und einer Menge von CO₂ zwischen ungefähr 40% und 50% und einer Menge eines Inertgases von weniger als ungefähr 10%; oder
- einer Menge von O₂ zwischen ungefähr 25 und 50% und einer Menge von weniger als ungefähr 25% CO₂, wobei eine Menge an Inertgas vorgesehen ist, welche ungefähr 50% überschreitet, und zwar entweder nach einem Luftleermachen und einem nachfolgenden Einleiten des Gases oder einfach durch Ausgleichen.

3. Behälter gemäß Anspruch 1 oder 2, der durch Entfernen des mit der flexiblen Membran versehenen, oberen Teils geöffnet werden kann, um einen Teil der zweischaligen Muscheln herauszunehmen und dann wieder geschlossen zu werden, wodurch die verbleibenden zweischaligen Muscheln indirekt durch diese Membran in den zusammen gepressten Zustand gebracht werden aufgrund des Überdrucks in dem oberen Teil im Vergleich zu dem normalen Druck, der in dem unteren Teil herrscht, welcher die zweischaligen Muscheln enthält.

4. Verfahren zum Verpacken von lebenden zweischaligen Muscheln in einer Verpackung gemäß irgendeinem der Ansprüche 1-3, wobei die zweischaligen Muscheln zusammen mit einem Gas oder Gasgemisch in den unteren Teil gepackt werden, wobei ein unter-atmosphärischer Druck innerhalb des unteren Teils der Verpackung geschaffen wird, um eine ausreichend dichte Verpackung herzustellen und den oberen Teil weiter unter inneren Überdruck zu setzen, um das zumindest eine Tier aufgrund der Verformung der Verpackung in einen zusammen gepressten Zustand zu zwingen, wodurch das zumindest eine Tier einen anaerobischen Metabolismus annimmt.

5. Verfahren gemäß Anspruch 4, welches ein Gasgemisch verwendet, das eine Menge von weniger als ungefähr 25% O₂ und eine Menge von weniger als ungefähr 25% CO₂ enthält.

6. Verfahren gemäß Anspruch 4, welches ein Gasgemisch verwendet, das eine Menge von mehr als ungefähr 50% O₂ und eine Menge von weniger als ungefähr 50% CO₂ enthält.

7. Verfahren gemäß Anspruch 4, welches ein Gasgemisch verwendet, das eine Menge von O₂ zwischen ungefähr 40% und 50% und eine Menge von CO₂ zwischen ungefähr 40% und 50% enthält.

8. Verfahren gemäß Anspruch 4, welches ein Gasgemisch verwendet, das eine Menge von O₂ zwischen ungefähr 25% und 50% und eine Menge von weniger als ungefähr 25% CO₂ enthält.

9. Verfahren gemäß irgendeinem der Ansprüche 4-8, wobei die zweischaligen Muscheln mit entweder einer Extramenge Wasser oder einer Menge eines chemischen Kalkproduktes, welches CO₂ absorbiert und/oder damit reagiert, versehen werden, was die Auflösung dieses CO₂ in den Wasseranteilen, die in der Schale der Tiere enthalten sind, vor oder während des Verpackens verhindert.

10. Verfahren gemäß irgendeinem der Ansprüche 4-9, welches ein Gas oder ein Gasgemisch mit einer Zusammensetzung gemäß irgendeinem der Ansprüche 2 oder 3 bei unter-atmosphärischem Druck verwendet, wobei ein Behälter, ein Gefäß, oder ein Beutel mit lebenden zweischaligen Muscheln in einer Kammer vorgesehen wird, wobei die Verpackung innerhalb dieser Kammer mit Hilfe einer Verpackungsmaschine innerhalb dieser Kammer hermetisch versiegelt wird, wobei die Verpackung nachfolgend aus dieser Kammer ausgeladen wird.

## Revendications

1. Récipient, tel qu'un contenant, un sac ou un emballage similaire, pour le stockage, le transport et/ou la distribution de bivalves vivants, formé d'une partie inférieure, ouverte sur le dessus, qui contient lesdits bivalves, et d'une partie supérieure, qui est elle-même hermétiquement close et qui comprend une membrane souple, et qui peut être placée et attachée sur la partie inférieure, ladite partie supérieure et ladite partie inférieure formant ainsi une unité hermétiquement close constituée de deux compartiments séparés par la membrane, la partie supérieure étant pressurisée afin de placer les bivalves, au moyen de la membrane pressurisée, dans un état dans lequel ils sont pressés les uns contre les autres, afin d'obtenir une augmentation du temps avant la mort et une diminution de l'égouttage des bivalves.

2. Récipient selon la revendication 1, dans lequel la partie inférieure contenant les bivalves comprend un gaz ou un mélange de gaz constitué de :
- une quantité de moins d'environ 25 % d'O₂ et une quantité de moins d'environ 50 % de CO₂ ; ou
- une quantité de plus d'environ 50 % d'O₂ et une quantité de moins d'environ 50 % de CO₂ ; ou
- une quantité d'O₂ comprise entre environ 40 % et 50 %, une quantité de CO₂ comprise entre environ 40 % et 50 %, et une quantité d'un gaz inerte de moins d'environ 10 % ; ou
- une quantité d'O₂ comprise entre environ 25 % et 50 % et une quantité de moins d'environ 25 % de CO₂, où il est prévu une quantité de gaz inerte excédant environ 50 %, soit après évacuation d'air et insertion ultérieure du gaz, soit juste par rinçage.

3. Récipient selon la revendication 1 ou 2, qui peut être ouvert par retrait de la partie supérieure pourvue de la membrane souple afin de sortir une partie des bivalves, puis être refermé, ce qui amène indirectement les bivalves restants dans ledit état dans lequel ils sont pressés les uns contre les autres par ladite membrane, sous l'effet de la surpression dans ladite partie supérieure par rapport à la pression normale présente dans ladite partie inférieure contenant lesdits bivalves.

4. Procédé d'emballage de bivalves vivants dans un emballage selon l'une quelconque des revendications 1 à 3, dans lequel lesdits bivalves sont emballés dans la partie inférieure, avec un gaz ou un mélange de gaz, dans lequel une pression subatmosphérique est créée dans la partie inférieure de l'emballage de façon à créer un emballage suffisamment serré et, la partie supérieure est en outre pressurisée de façon à forcer le au moins un animal, sous l'effet de la déformation de l'emballage, à prendre un état dans lequel il est pressé, moyennant quoi le au moins un animal adopte un métabolisme anaérobie.

5. Procédé selon la revendication 4, utilisant un mélange gazeux contenant une quantité de moins d'environ 25 % d'O₂ et une quantité de moins d'environ 25 % de CO₂.

6. Procédé selon la revendication 4, utilisant un mélange gazeux contenant une quantité de plus d'environ 50 % d'O₂ et une quantité de moins d'environ 50 % de CO₂.

7. Procédé selon la revendication 4, utilisant un mélange gazeux contenant une quantité d'O₂ comprise entre environ 40 % et 50 %, une quantité de CO₂ comprise entre environ 40 % et 50 %.

8. Procédé selon la revendication 4, utilisant un mélange gazeux contenant une quantité d'O₂ comprise entre environ 25 % et 50 % et une quantité de moins d'environ 25 % de CO₂.

9. Procédé selon l'une quelconque des revendications 4 à 8, dans lequel les bivalves sont pourvus d'une quantité d'eau supplémentaire
ou d'une quantité de produit chimique de type chaux absorbant et/ou réagissant avec le CO₂ et empêchant la dissolution dudit CO₂ dans les fractions d'eau contenues dans la coquille des animaux, avant ou pendant l'emballage.

10. Procédé selon l'une quelconque des revendications 4 à 9 utilisant un gaz ou un mélange de gaz ayant une composition selon l'une quelconque des revendications 2 ou 3, à une pression subatmosphérique, dans lequel un récipient, un contenant ou un sac, comprenant des bivalves vivants, est fourni dans une chambre, lequel emballage est scellé de façon hermétique à l'intérieur de ladite chambre, au moyen d'une machine d'emballage située dans ladite chambre, l'emballage étant ensuite déchargé de ladite chambre.
